# FASCICULE DE BREVET EUROPEEN

(11) **EP 4 590 506 B1**
(45) Date de publication et mention de la délivrance du brevet: **12.08.2026**
(21) Numéro de dépôt: 23773209.4
(22) Date de dépôt: 15.09.2023
(51) Int. Cl.: B32B 7/023, B32B 17/10, G02B 5/02

(54) **DISPOSITIF D'AFFICHAGE BILATÉRAL**
BILATERALE ANZEIGEVORRICHTUNG
BILATERAL DISPLAY DEVICE

(30) Priorité: 19.09.2022 FR 2209420
(43) Date de publication de la demande: 30.07.2025
(73) Titulaire: Saint-Gobain Sekurit France, 60150 Thourotte (FR)
(72) Inventeur: DURDEVIC, Ljiljana, 93300 AUBERVILLIERS (FR); OZANAM, Cécile, 93300 AUBERVILLIERS (FR); GAYOUT, Patrick, 93300 AUBERVILLIERS (FR)
(74) Mandataire: Saint-Gobain Recherche
(86) Numéro de dépôt international: PCT/EP2023/075549
(87) Numéro de publication internationale: WO 2024/061780

(56) Documents cités:
- WO-A1-2012/104547
- WO-A1-2018/224766
- CN-U- 210 297 793

## Description

### DOMAINE TECHNIQUE DE L'INVENTION

Le domaine technique de l'invention est celui de la projection d'informations pour une utilisation en cloisons intérieures dans les transports en communs (trains, bus, métros, tramways...) et plus généralement pour tout type de cloisons quel que soit le domaine (bâtiment, musées, locaux commerciaux...).

La présente invention concerne un dispositif d'affichage bilatéral, un système de projection sur dispositif d'affichage bilatéral et un procédé de fabrication d'un dispositif d'affichage bilatéral.

### ARRIERE-PLAN TECHNOLOGIQUE DE L'INVENTION

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuse d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. Par analogie, la transmission à travers un vitrage est dite spéculaire lorsqu'un rayonnement incident sur le vitrage avec un angle d'incidence donné est transmis par le vitrage avec un angle de transmission égal à l'angle d'incidence.

Un inconvénient des vitrages transparents standards est qu'ils renvoient des reflets nets, à la manière de miroirs, ce qui n'est pas souhaitable dans certaines applications. Ainsi, lorsqu'un vitrage est utilisé pour une fenêtre de bâtiment ou un écran d'affichage, il est préférable de limiter la présence de reflets, qui réduisent la visibilité à travers le vitrage. Des reflets nets sur un vitrage peuvent également générer des risques d'éblouissement, avec des conséquences en termes de sécurité, par exemple lorsque des phares de véhicules se reflètent sur des façades vitrées de bâtiments. Ce problème se pose tout particulièrement pour les façades vitrées d'aéroports. Il est en effet essentiel de limiter au maximum le risque d'éblouissement des pilotes à l'approche des terminaux.

Les vitrages translucides, quant à eux, s'ils ont l'avantage de ne pas générer de reflets nets, ne permettent toutefois pas d'avoir une vision claire à travers le vitrage.

Afin de remédier à ces inconvénients, il est connu de l'état de la technique, dont le document WO2012104547A1, d'utiliser un élément en couches transparent dans la fabrication d'un vitrage, le but étant de conférer à ce dernier des propriétés de réflexion diffuse tout en maintenant des propriétés de transmission spéculaire.

Il existe un besoin de perfectionner le vitrage cité dans le document WO2012104547A1.

WO 2018/224766 A1 divulgue un article utilisé comme écran de projection comprenant deux éléments diffusants à réflexion diffuse distincts, sous forme de plans ou de plaques parallèles ainsi qu'un substrat additionnel, le substrat additionnel et le premier élément diffusant étant solidarisés par feuilletage à l'aide d'une feuille en matière plastique.

### RESUME DE L'INVENTION

L'invention offre une solution au problème évoqué précédemment, en permettant d'améliorer l'élément en couches de l'état de l'art.

Un aspect de l'invention concerne un dispositif d'affichage bilatéral comprenant :
- Un premier élément en couches transparent à réflexion diffuse,
- Un deuxième élément en couches transparent à réflexion diffuse,
- Un substrat central compris entre le premier élément en couches et le deuxième élément en couches, et parallèle au premier et deuxième éléments en couches ;
- Une première couche absorbante s'étendant le long d'au moins une portion du substrat central et positionnée entre le substrat central et le premier élément en couches.

Grâce à l'invention, deux éléments en couches sont répartis de part et d'autre d'un substrat central pour former un dispositif d'affichage bilatéral et permettre par exemple d'afficher un contenu différent sur chaque élément en couches. Les propriétés de réflexion diffuse de chaque élément en couches permettent à chaque élément en couches d'être utilisé comme écran de projection. Ainsi, le dispositif d'affichage biface permet de projeter sur chacune de ses faces et en particulier des faces extérieures des éléments en couches un contenu différent adapté à deux publics situés de part et d'autre du dispositif d'affichage biface. Le dispositif d'affichage biface peut être mis en place dans un musée, une salle de réunion, des salons et expositions et des transports en communs (bus, tramway, avion, train, métro). Par exemple, si le dispositif d'affichage biface est mis en place dans une cloison séparant deux classes différentes d'un train ou deux classes différentes d'un avion, un contenu adapté au public de chaque classe peut être affiché de part et d'autre du dispositif d'affichage. La première couche absorbante permet avantageusement de séparer les contenus projetés sur chaque élément en couches sans que les contenus interfèrent entre eux. Ainsi, un observateur situé d'une part du dispositif d'affichage ne verra pas le contenu projeté de l'autre part du dispositif d'affichage.

L'invention permet avantageusement de perfectionner l'élément en couches décrit dans l'état de l'art, car celui-ci ne permet pas d'observer deux contenus différents de part et d'autre dudit élément en couches. De plus, la superposition de deux éléments en couches décrits dans l'état de l'art ne permettrait pas d'observer deux contenus distincts sans que lesdits contenus interfèrent.

Outre les caractéristiques qui viennent d'être évoquées dans le paragraphe précédent, le dispositif d'affichage bilatéral selon un aspect de l'invention peut présenter une ou plusieurs caractéristiques complémentaires parmi les suivantes, considérées individuellement ou selon toutes les combinaisons techniquement possibles :
- Le dispositif d'affichage selon l'invention comprend une deuxième couche absorbante s'étendant le long d'au moins une portion du substrat central et positionnée entre le substrat central et le deuxième élément en couches ;
- La première couche absorbante est un émail foncé ou une peinture foncée, par exemple un émail noir ou une peinture noire.
- La deuxième couche absorbante est un émail foncé ou une peinture foncée, par exemple un émail noir ou une peinture noire.
- Le substrat central est transparent.
- Le substrat central est absorbant.
- L'épaisseur du substrat est comprise entre 0.7 et 12 mm.
- L'épaisseur du substrat est comprise entre 1 et 6 mm et en particulier entre 2 et 5 mm.
- Chaque élément en couches parmi les premier et deuxième éléments en couches comprend :
   ∘ Une couche intérieure constituée en des matériaux diélectriques,
   ∘ Une couche extérieure constituée en des matériaux diélectriques,

La couche intérieure étant la couche la plus proche du substrat central et la couche extérieure étant la couche la plus éloignée du substrat central, la couche intérieure et la couche extérieure ayant sensiblement le même indice de réfraction,

Chaque élément de couches parmi les premier et deuxième élément en couches comprend en outre :
∘ une couche centrale intercalée entre la couche intérieure et la couche extérieure, cette couche centrale étant formée soit par une couche unique qui est une couche diélectrique d'indice de réfraction différent de celui de la couche intérieure ou une couche métallique, soit par un empilement de couches qui comprend au moins une couche diélectrique d'indice de réfraction différent de celui de la couche intérieure ou une couche métallique,
où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.
- la couche extérieure d'au moins un élément en couches des premier et deuxième éléments en couches est un substrat en verre comprenant une surface principale lisse et une surface principale texturée, la surface principale texturée étant en contact avec la couche centrale.
- au moins un élément en couches des premier et deuxième éléments en couches comprend un substrat extérieur en contact avec la couche extérieure et comprend une couche intermédiaire réalisée préférentiellement en un matériau polymère, en contact selon une interface lisse avec la couche intérieure dudit élément en couches d'une part, et le substrat central d'autre part.

Un autre aspect de l'invention concerne un système de projection sur un dispositif d'affichage bilatéral caractérisé en ce qu'il comprend un premier et un deuxième projecteur, et un dispositif d'affichage bilatéral selon l'invention, le premier projecteur étant destiné à être positionné en regard du premier élément en couches et le deuxième projecteur étant destiné à être positionné en regard du deuxième élément en couches.

Un autre aspect de l'invention concerne un procédé de fabrication d'un dispositif d'affichage bilatéral selon l'invention, le procédé comprend les étapes suivantes :
- Obtention d'un premier substrat préférentiellement en verre comportant une première surface principale lisse et une deuxième surface principale lisse opposées ;
- Dépôt de la première couche absorbante, le long d'une portion du premier substrat, le dépôt de la première couche absorbante étant réalisé sur la première surface principale lisse du premier substrat ;
- Formation, sur la première couche absorbante, du premier élément en couches ;
- Formation, sur la deuxième surface principale du premier substrat, du deuxième élément en couches ;
le premier substrat formant le substrat central, la première surface principale lisse étant la première surface extérieure du substrat central et la deuxième surface principale lisse étant la deuxième surface extérieure du substrat central.

Selon un mode de réalisation, le procédé comprend avant l'étape de formation du deuxième élément en couches ou avant l'étape de formation du premier élément en couches, une étape de dépôt de la deuxième couche absorbante le long d'une portion du premier substrat, le dépôt de la deuxième couche absorbante étant réalisé sur la deuxième surface principale lisse du premier substrat et en ce que l'étape de formation du deuxième élément en couches est réalisée sur la deuxième couche absorbante.

Selon un mode de réalisation, l'étape de formation du premier élément en couches comprend les sous-étapes suivantes :
- obtention d'un deuxième substrat, préférentiellement en verre, comportant une surface principale lisse et une surface principale texturée, ledit deuxième substrat formant la couche extérieure du premier élément en couches,
- dépôt d'une couche conforme sur la couche extérieure du premier élément en couches et en particulier sur la surface principale texturée de ladite couche extérieure,
- assemblage par feuilletage de l'ensemble formé par la couche extérieure du premier élément en couches et de la couche centrale avec le substrat central, l'assemblage étant réalisé via une couche intercalaire, préférentiellement en polymère, adaptée pour se déformer afin d'épouser une surface texturée de la couche centrale, ladite couche intercalaire épousant la première surface extérieure du substrat central et formant la couche intérieure du premier élément en couches.

Selon un mode de réalisation, l'étape de formation du deuxième élément en couches comprend les sous-étapes suivantes :
- obtention d'un troisième substrat, préférentiellement en verre, comportant une surface principale lisse et une surface principale texturée, ledit troisième substrat formant la couche extérieure du deuxième élément en couches,
- dépôt d'une couche conforme sur la couche extérieure du deuxième élément en couches et en particulier sur la surface principale texturée de ladite couche extérieure,
- assemblage par feuilletage de l'ensemble formé par la couche extérieure du premier élément en couches et de la couche centrale avec le substrat central, l'assemblage étant réalisé via une couche intercalaire, préférentiellement en polymère, qui est adaptée pour se déformer afin d'épouser une surface texturée de la couche centrale, ladite couche intercalaire épousant la première surface extérieure du substrat central et formant la couche intérieure du premier élément en couches.

Selon un autre mode de réalisation, l'étape de formation du premier élément en couches comprend les sous-étapes suivantes :
- Obtention d'un deuxième substrat, préférentiellement en verre, comportant une première surface principale lisse et une deuxième surface principale lisse, ledit deuxième substrat formant le substrat extérieur, ladite première surface principale lisse étant la surface supérieure du substrat extérieur, et ladite deuxième surface principale lisse étant la surface inférieure du substrat extérieur,
- Obtention d'un troisième substrat, préférentiellement sous la forme d'un film plastique, comprenant une surface principale lisse et une surface principale texturée, ladite surface principale lisse étant la surface inférieure de la couche intérieure et ladite surface texturée étant la surface supérieure de la couche intérieure,
- Dépôt préférentiellement par magnétron et/ou sérigraphie, d'une couche conforme sur la couche intérieure et en particulier sur la surface supérieure texturée de la couche intérieure, ladite couche conforme formant la couche centrale,
- Assemblage par feuilletage du substrat central avec l'ensemble formé par la couche intérieure et la couche centrale, l'assemblage étant réalisé via la couche intermédiaire,
- Assemblage par feuilletage du substrat extérieur avec l'ensemble formé par la couche intérieure, la couche centrale, la couche intermédiaire et le substrat central, l'assemblage étant réalisé via la couche externe qui est adaptée pour se déformer afin d'épouser une surface texturée de la couche centrale. Selon un autre mode de réalisation, l'étape de formation du deuxième élément en couches comprend les sous-étapes suivantes :
   - Obtention d'un deuxième substrat, préférentiellement en verre, comportant une première surface principale lisse et une deuxième surface principale lisse, ledit deuxième substrat formant le substrat extérieur, ladite première surface principale lisse étant la surface supérieure du substrat extérieur, et ladite deuxième surface principale lisse étant la surface inférieure du substrat extérieur,
   - Obtention d'un troisième substrat, préférentiellement sous la forme d'un film plastique, comprenant une surface principale lisse et une surface principale texturée, ladite surface principale lisse étant la surface inférieure de la couche intérieure et ladite surface texturée étant la surface supérieure de la couche intérieure,
   - Dépôt préférentiellement par magnétron et/ou sérigraphie, d'une couche conforme sur la couche intérieure et en particulier sur la surface supérieure texturée de la couche intérieure, ladite couche conforme formant la couche centrale,
   - Assemblage par feuilletage du substrat central avec l'ensemble formé par la couche intérieure et la couche centrale, l'assemblage étant réalisé via la couche intermédiaire,
   - Assemblage par feuilletage du substrat extérieur avec l'ensemble formé par la couche intérieure, la couche centrale, la couche intermédiaire et le substrat central, l'assemblage étant réalisé via la couche externe qui est adaptée pour se déformer afin d'épouser une surface texturée de la couche centrale.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] est une représentation schématique d'un dispositif d'affichage bilatéral.
[Fig. 2] est une représentation schématique d'un mode de réalisation du dispositif d'affichage bilatéral.
[Fig. 3] est une représentation schématique d'un mode de réalisation du dispositif d'affichage bilatéral.
[Fig. 4] est une représentation schématique d'un mode de réalisation du dispositif d'affichage bilatéral.
[Fig. 5] est une représentation schématique d'un mode de réalisation du dispositif d'affichage bilatéral.
[Fig. 6] est une représentation schématique détaillée d'un élément en couches.
[Fig. 7] est un une représentation schématique d'un mode de réalisation d'un élément en couches.
[Fig. 8] est une représentation schématique d'un système de projection
[Fig. 9] est un procédé de fabrication du dispositif d'affichage bilatéral.

### DESCRIPTION DETAILLEE

Les figures sont présentées à titre indicatif et nullement limitatif de l'invention.

Sauf précision contraire, un même élément apparaissant sur des figures différentes présente une référence unique.

Un premier aspect de l'invention concerne un dispositif d'affichage bilatéral.

Le dispositif d'affichage bilatéral comprend un premier élément en couches transparent à réflexion diffuse, un deuxième élément en couches transparent à réflexion diffuse et un substrat central.

Le substrat central est compris entre le premier élément en couches et le deuxième élément en couches, et est parallèle au premier et deuxième éléments en couches.

Le dispositif d'affichage bilatéral comprend une première couche absorbante s'étendant le long d'au moins une portion du substrat central et positionnée entre le substrat central et l'un des premier et deuxième éléments en couches. Le premier élément en couches, le deuxième élément en couches et le substrat central sont parallèles entre eux.

Un élément transparent est un élément à travers lequel il y a une transmission spéculaire de rayonnement au moins dans les domaines de longueurs d'onde utiles pour l'application visée de l'élément. Dans le cadre de l'invention, chaque élément en couches est transparent au moins dans le domaine de longueurs d'onde du visible.

Un élément est dit à "réflexion diffuse" lorsqu'un rayonnement incident sur l'élément avec un angle d'incidence donné est réfléchi par ledit élément dans une pluralité de directions. La propriété de réflexion diffuse de l'élément en couches permet de réfléchir une grande partie d'un rayonnement incident sur ledit élément, dans une pluralité de directions, du côté d'incidence du rayonnement. Un élément en couches transparent à forte réflexion diffuse trouve application, par exemple, pour des écrans d'affichage ou de projection.

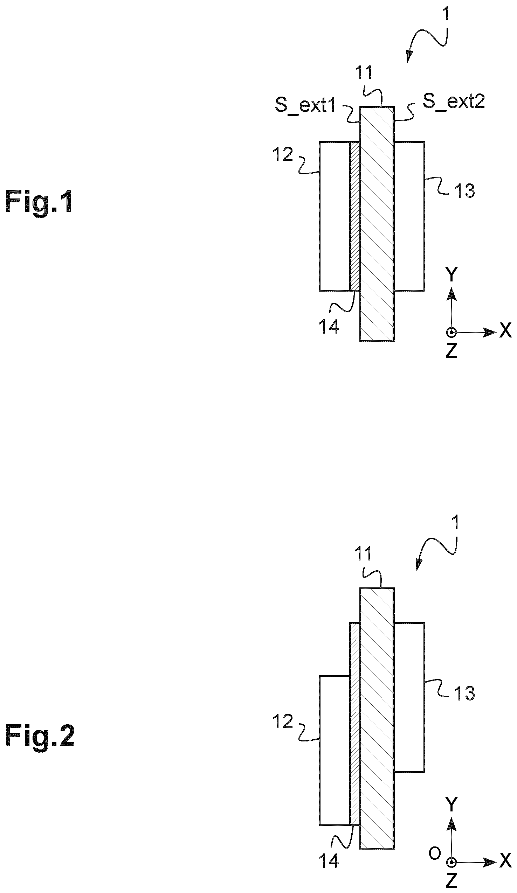

La [Fig. 1] montre une représentation schématique d'un premier mode de réalisation du dispositif d'affichage bilatéral 1.

Le dispositif d'affichage bilatéral 1 comprend le premier élément en couches 12 transparent à réflexion diffuse, le deuxième élément en couches 13 transparent à réflexion diffuse et le substrat central 11.

En référence à la [Fig. 1], le dispositif bilatéral 1, le premier élément en couches 12 et le deuxième élément en couches 13 sont parallèles à un même plan.

Le substrat central 11 comprend une première surface externe S_ext1 et une deuxième surface externe S_ext2 opposées et parallèles au même plan (O,Y,Z).

En référence à la [Fig. 1], le dispositif d'affichage bilatéral 1 comprend la première couche absorbante 14 s'étendant le long d'au moins une portion du substrat central 11, et en particulier le long de la première surface de la portion du substrat central 11 et positionnée entre le substrat central 11 et le deuxième élément en couches 13.

Ainsi, la première couche absorbante 14 est parallèle au plan (O,Y,Z).

La couche absorbante 14 s'étend le long de la portion du substrat central 11 selon l'axe Y.

En particulier, la première couche absorbante 14 s'étend le long de la totalité du premier élément en couches 12.

En référence à la [Fig. 1], la longueur selon l'axe Y de la première couche absorbante 14 est sensiblement égale à la longueur selon l'axe Y du premier élément en couches 12 et égale à la longueur selon l'axe Y du deuxième élément en couches 13.

Selon l'invention, la longueur de la première couche absorbante est telle que chaque plan perpendiculaire au premier élément en couches (et par conséquent perpendiculaire au deuxième élément en couches) et passant par ledit premier élément en couches et/ou passant par le deuxième élément en couches passe également par la première couche absorbante. Avantageusement, cette caractéristique permet à la première couche absorbante d'absorber chaque rayonnement incident vers le premier élément en couches et par le deuxième élément en couches en plus d'absorber chaque rayonnement incident vers le premier élément en couches.

Le premier élément en couches et le deuxième élément en couches sont en vis-à-vis avec la première couche absorbante.

La [Fig. 2] est un deuxième mode de réalisation du dispositif d'affichage 1, dans lequel la longueur de la première couche absorbante 14 est telle que chaque rayonnement reçu par le premier élément en couches 12 et/ou par le deuxième élément en couches 13 est absorbé par la première couche absorbante.

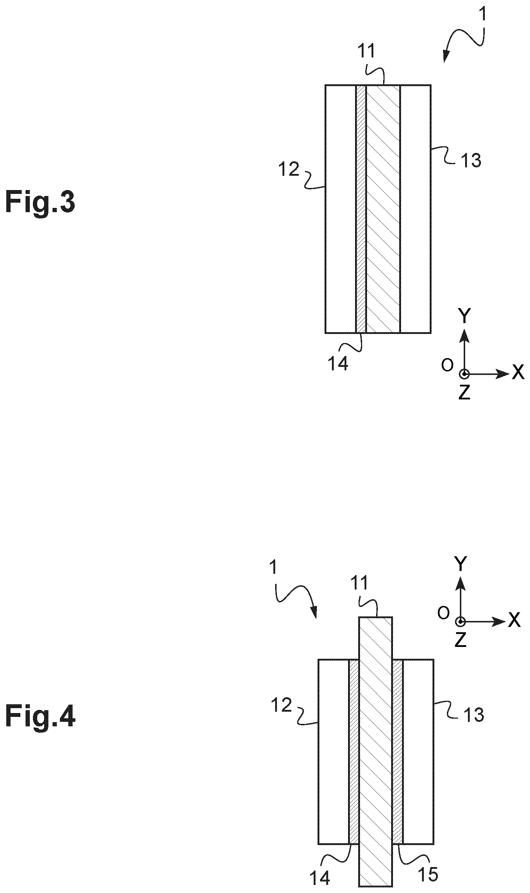

Selon un mode de réalisation, représenté à la [Fig. 3], la longueur du premier élément en couches 12 selon l'axe Y, la longueur du deuxième élément en couches 13 selon l'axe Y et la longueur de la première couche absorbante 14 selon l'axe Y sont sensiblement identiques à la longueur du substrat central selon l'axe Y.

Selon un mode de réalisation, le dispositif d'affichage bilatéral 1 comprend une deuxième couche absorbante s'étendant le long d'au moins une portion du substrat central 11, et en particulier le long d'une surface de la portion du substrat central 11 et positionnée entre le substrat central 11 et le deuxième élément en couches 13.

La [Fig. 4] est un mode de réalisation dans lequel le dispositif d'affichage bilatéral 1 comprend la deuxième couche absorbante 15.

Selon le mode de réalisation selon lequel le dispositif d'affichage 1 comprend à la fois la première couche absorbante 14 et la deuxième couche absorbante 15, la longueur de la première couche absorbante 14 et la longueur de la deuxième couche absorbante 15 sont définies telles que chaque plan perpendiculaire au premier élément en couches 12 (et par conséquent perpendiculaire au deuxième élément en couches 13) et passant par le premier élément 12 en couches et/ou passant par le deuxième élément en couches 13, passe également par la première couche absorbante 14 et/ou par la deuxième couche absorbante 15.

Préférentiellement, la longueur du deuxième élément en couches 13 selon l'axe Y est inférieure ou sensiblement égale à la longueur de la deuxième couche absorbante 15 selon l'axe Y et chaque point du deuxième élément en couches 13 est en contact avec chaque point de la première couche absorbante 14.

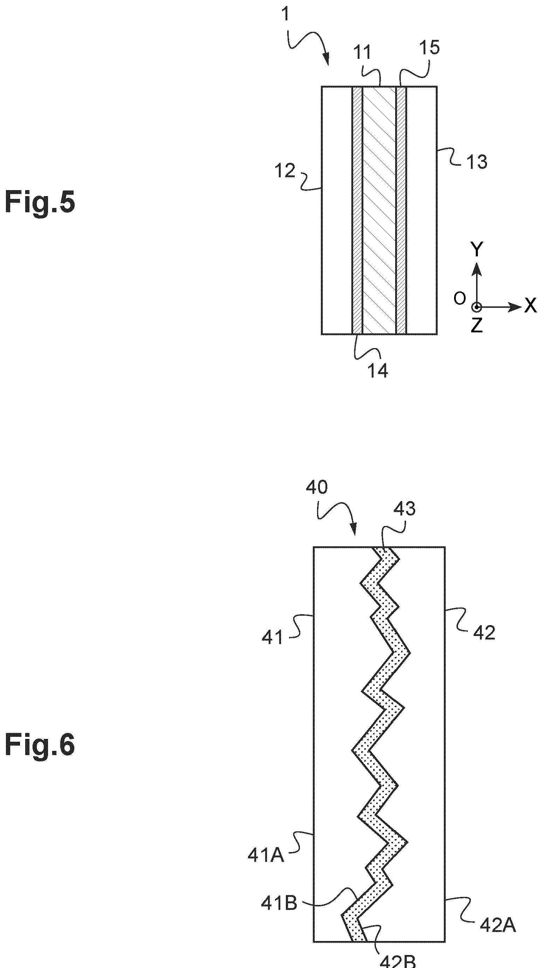

Selon un mode de réalisation représenté à la [Fig. 5], la longueur de la deuxième couche absorbante 15 selon l'axe Y, la longueur de la première couche absorbante 14, la longueur du premier élément en couches 12 et la longueur du deuxième élément en couches 13 selon l'axe Y sont sensiblement égales à la longueur du substrat 11 selon l'axe Y.

Selon un mode de réalisation, le substrat central 11 est transparent. Par exemple, le substrat central 11 est un verre transparent.

Selon un mode de réalisation le substrat central 11 est transparent et absorbant. Par exemple, le substrat central 11 est un verre transparent et absorbant.

Selon un mode de réalisation, le substrat central 11 est opaque. Par exemple, le substrat central 11 est un verre opaque.

L'épaisseur du substrat central 11, selon l'axe X, est de préférence comprise entre 0.7mm et 12mm, plus particulièrement comprise entre 1mm et 6 mm, et de préférence comprise entre 1,5mm et 5 mm ou entre 2mm et 5 mm. Par exemple, l'épaisseur du substrat central 11 est égale à 4mm.

Un exemple de substrat en verre directement utilisable en tant que substrat central 11 est le substrat en verre commercialisé par la société Saint-Gobain Glass dans la gamme PARSOL ULTRA GREY VENUS (VG20).

De préférence, la première couche absorbante 14 est foncée ou noire. La première couche absorbante 14 peut être un émail foncé, par exemple un émail noir, ou une peinture foncée, par exemple une peinture noire.

Un élément est dit foncé s'il présente une luminance du noir inférieure à 30 cd/m² dans un environnement éclairé à 350 LUX mesurée selon la direction de diffusion privilégiée. La couleur "foncée" peut également être évaluée grâce aux coordonnées colorimétriques L*, a* et b* calculées en prenant en compte l'illuminant D65 et l'observateur de référence CIE-1931. La composante L* définit la clarté, qui va de la valeur 0 pour le noir à la valeur 100 pour le blanc. Selon l'invention, un élément est dit "foncé" s'il présente une clarté telle que la valeur L* mesurée en réflexion, est inférieure à 50.

De préférence, la première couche absorbante 14 est déposée par sérigraphie sur la portion du substrat central 11.

Selon le mode de réalisation dans lequel le dispositif d'affichage bilatéral 1 comprend la deuxième couche absorbante 15, ladite deuxième couche absorbante 15 est foncée ou noire. La deuxième couche absorbante 15 peut être un émail foncé, par exemple un émail noir, ou une peinture foncée, par exemple une peinture noire.

Chaque élément en couches parmi le premier élément en couches et le deuxième élément en couches comprend au moins : une couche intérieure constituée en des matériaux diélectriques, une couche extérieure constituée en des matériaux diélectriques et une couche centrale intercalée entre le premier élément en couches et le deuxième élément en couches.

La couche extérieure et la couche intérieure de chaque élément en couches parmi le premier élément en couches et le deuxième élément en couches ont sensiblement le même indice de réfraction, c'est-à-dire que les matériaux diélectriques formant la couche intérieure ont le même indice de réfraction que les matériaux diélectriques formant la couche extérieure. Deux matériaux diélectriques ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux diélectriques respectifs de la couche intérieure et de la couche extérieure de l'élément en couches est inférieure à 0,05, encore de préférence inférieure à 0,015.

Selon l'invention, la couche intérieure de chaque élément en couches est la couche la plus proche du substrat central, et la couche extérieure de chaque élément en couches est la couche la plus éloignée du substrat central. En particulier, la couche centrale est intercalée entre la couche intérieure et la couche extérieure.

La couche centrale étant formée soit par une couche unique qui est une couche diélectrique d'indice de réfraction différent de l'indice de réfraction de la couche intérieure (et par conséquent différent de l'indice de réfraction de la couche extérieure) ou une couche métallique, soit par un empilement de couches qui comprend au moins une couche diélectrique d'indice de réfraction différent de l'indice de réfraction de la couche intérieure (et par conséquent celui de la couche extérieure) ou une couche métallique,

Selon l'invention, chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

La [Fig. 6] est une représentation schématique d'un mode de réalisation d'un élément en couches 40.

L'élément en couches 40 représenté sur la [Fig. 6] comprend, une couche intérieure 42, une couche extérieure 41 et une couche centrale 43 intercalée entre la couche intérieure et la couche extérieure.

Tel que décrit précédemment, la couche intérieure 42 est la couche la plus proche du substrat central 11 selon l'axe X parmi la couche intérieure 42 et la couche extérieure 41 de l'élément en couches.

La couche extérieure 41 est la couche la plus éloignée du substrat central 11 selon l'axe X parmi la couche intérieure et la couche extérieure.

La couche intérieure 42 présente une surface principale lisse 42A et une surface principale texturée 42B, la surface principale lisse 42A étant dirigée vers l'extérieur de l'élément élément en couches 40 et la surface principale texturée 42B étant dirigée vers l'intérieur de l'élément en couches 40.

La couche extérieure 41 présente une surface principale lisse 41A et une surface principale texturée 41B, la surface principale lisse 41A dirigée vers l'extérieur de l'élément en couches 40 et la surface principale texturée 41B étant dirigée vers l'intérieur de l'élément en couches.

Une surface (respectivement interface) lisse est une surface (respectivement interface) pour laquelle les irrégularités de surface (respectivement d'interface) sont de dimensions inférieures à la longueur d'onde du rayonnement incident sur la surface/l'interface, de sorte que le rayonnement n'est pas dévié par ces irrégularités de surface (respectivement d'interface). Le rayonnement incident est alors transmis et réfléchi de manière spéculaire par la surface/l'interface.

Une surface texturée d'un substrat est une surface pour laquelle les propriétés de surface varient à une échelle plus grande que la longueur d'onde du rayonnement incident sur la surface. Le rayonnement incident est alors transmis et réfléchi de manière diffuse par la surface. La texturation d'une surface peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat; par abrasion au moyen de particules ou de surfaces abrasives, en particulier par sablage; par traitement chimique, notamment traitement à l'acide dans le cas d'un substrat en verre; par moulage, notamment moulage par injection dans le cas d'un substrat en polymère thermoplastique, par gravure.

La surface principale lisse 41A, dirigée vers l'extérieur de l'élément en couches 40, permet une transmission spéculaire de rayonnement à la surface principale texturée 41B, c'est-à-dire l'entrée d'un rayonnement dans la couche extérieure 41 ou la sortie d'un rayonnement depuis la couche extérieure 41 sans modification de la direction du rayonnement.

La surface principale lisse 42A, dirigée vers l'extérieur de l'élément en couches 40, permet une transmission spéculaire de rayonnement à la surface principale texturée 42B, c'est-à-dire l'entrée d'un rayonnement dans la couche intérieure 42 ou la sortie d'un rayonnement depuis la couche intérieure 42 sans modification de la direction du rayonnement.

Les textures des surfaces internes 41B et 42B sont complémentaires l'une de l'autre. Comme bien visible sur la [Fig. 6], les surfaces texturées 41B et 42B sont positionnées en regard l'une de l'autre, dans une configuration où leurs textures sont strictement parallèles entre elles.

La couche extérieure 41 est formée d'au moins un matériau diélectrique.

Selon un mode de réalisation, la couche extérieure 41 de l'élément en couches 40 est un verre texturé. Des exemples de verres texturés pouvant être utilisés en tant que couche extérieure sont des substrats en verre commercialisé par la société Saint-Gobain Glass dans la gamme SATINOVO^{®}, qui présentent sur l'une de leur surfaces une texture obtenue par sablage ou attaque acide, les substrats en verre commercialisés par la société Saint-Gobain Glass dans la gamme ALBARINO^{®} S, P ou G dans la gamme MASTERGLASS^{®}, qui présentent sur l'une de leurs surfaces principales une texture obtenue par laminage.

La couche intérieure 42 est formée d'au moins un matériau diélectrique.

Selon le mode de réalisation dans lequel la couche extérieure 41 de l'élément en couches 40 est un verre texturé, la couche intérieure 42 de l'élément en couches est de préférence en PVB (acronyme de l'expression « polybutyral de vinyle »).

Le matériau diélectrique formant la couche extérieure 41 à un indice de réfraction sensiblement égal à l'indice de réfraction du matériau diélectrique de la couche intérieure 42.

Selon un mode de réalisation, la couche centrale 43 comprend une unique couche formée d'un matériau diélectrique d'indice de réfraction différent de l'indice de réfraction du matériau diélectrique formant la couche intérieure 42 et par conséquent différent de l'indice de réfraction du matériau diélectrique formant la couche extérieure 41.

Selon un mode de réalisation, la couche centrale 43 est formée par un empilement de couches, l'empilement de couches comprenant au moins une couche formée d'un matériau diélectrique d'indice de réfraction différent de celui du matériau diélectrique de la couche intérieure 42 et de celui du matériau diélectrique de la deuxième couche extérieure 41.

Selon un mode de réalisation, la couche centrale 43 comprend une unique couche métallique.

Selon un mode de réalisation, la couche centrale 43 est formée par un empilement de couches, l'empilement de couches comprenant au moins une couche métallique.

En particulier, surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

Au sens de l'invention, la surface de contact entre deux couches adjacentes est l'interface entre les deux couches adjacentes.

La propriété de réflexion diffuse du premier élément en couches provient de ce que chaque surface de contact entre deux couches adjacentes qui sont l'une diélectrique et l'autre métallique, ou qui sont deux couches diélectriques d'indices de réfraction différents, est texturée.

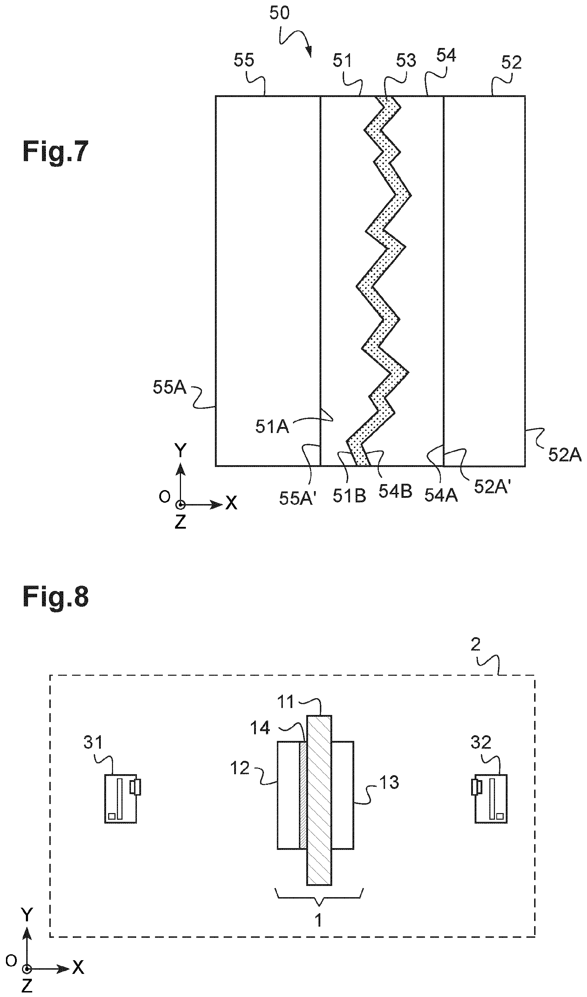

La [Fig. 7] est une représentation schématique d'un deuxième mode de réalisation d'un élément en couches 50.

L'élément en couches 50 représenté sur la [Fig. 7] comprend, une couche intérieure 52, une couche extérieure 51, une couche intermédiaire 54, une couche centrale 53 et un substrat extérieur 55 en contact avec la couche extérieure 53.

La couche intérieure 52 est la couche la plus proche du substrat central 11 parmi la couche intérieure 52 et la couche extérieure 51 de l'élément en couches.

La couche extérieure 51 est la couche la plus éloignée du substrat central 11 parmi la couche intérieure 52 et la couche extérieure 51.

La couche intérieure 52 présente une première surface principale lisse 52A et une deuxième surface principale lisse 52A'.

La couche extérieure 51 présente une surface principale lisse 51A et une surface principale texturée 51B, la surface principale lisse 51A dirigée vers l'extérieur de l'élément en couches 50 et la surface principale texturée 51B étant dirigée vers l'intérieur de l'élément en couches.

En référence à la [Fig. 5], le substrat extérieur 55 comprend une surface principale extérieure 55A lisse dirigée vers l'extérieur de l'élément en couches 50 et une surface principale intérieure 55A' lisse dirigée vers l'intérieur de l'élément en couches et opposée à ladite surface externe, lesdites surface externe et surface interne étant parallèles.

En référence à la [Fig. 7], le substrat extérieur 55 est transparent et peut être formé de polymère transparent, verre transparent ou céramique transparente. Lorsque le substrat extérieur est formé de polymère, celui-ci peut-être rigide ou flexible.

De préférence, le substrat extérieur 55 est le substrat en verre commercialisé par la société Saint-Gobain Glass dans la gamme SGG PLANICLEAR.

En référence à la [Fig. 7], lorsque l'élément en couches 50 comprend le substrat extérieur 55, l'élément en couches comprend de préférence une première couche intermédiaire 51 feuilletée entre le substrat extérieur 55 et la couche centrale 53 et une deuxième couche intermédiaire 52 feuilletée entre la couche intérieure 54 et le substrat central 11.

Selon un mode de réalisation dans lequel l'élément en couches comprend le substrat extérieur 55, la couche intermédiaire 52 est de préférence formée de OCA (de l'anglais "Optical Clear Adhesive") ou matériau adhesif optique transparent en français. Le matériau adhésif transparent « OCA » désigne un ensemble de matériaux polymériques qui, dans le cas de la présente invention, sont utilisés en tant qu'adhésifs transparents. Des exemples de matériaux polymériques appropriés pour la couche diélectrique de la couche intérieure comprennent, notamment, le polyuréthane, le polyépoxyde, le polysiloxane, le polyacrylate, le polyester, etc.

Avantageusement, une couche intermédiaire 52 formée de OCA permet de réduire voire supprimer un potentiel effet de « moutonnement » (« waviness » dans la littérature anglo-saxonne) au travers de l'ensemble {élément en couches + substrat central} lorsque la surface principale extérieure du substrat extérieur est observée. En effet, un effet de moutonnement tend à donner une impression visuelle d'ondulation des couches placées entre le substrat extérieur et le substrat central.

Par exemple, selon le mode de réalisation précédent, la couche intérieure présente une épaisseur comprise entre 200 µm et 250 µm. De telles valeurs d'épaisseur ne sont toutefois pas limitative de l'invention.

Selon le mode de réalisation de la [Fig. 7], la couche diélectrique de la couche intermédiaire 51 peut être formée du matériau adhésif transparent OCA, ou formée de PVB ("Polybutyral de vinyle") qui est un polymère thermoplastique de synthèse, ou formée de EVA (« éthylène-acétate de vinyle ») ou formée de PU (polyuréthane).

Selon un mode de réalisation dans lequel l'élément en couches comprend le substrat extérieur, ladite couche intermédiaire est réalisée en PMMA et peut présenter par exemple une épaisseur comprise entre 50 µm et 250 µm. Toutefois, rien n'exclut d'envisager d'autres matériaux pour la réalisation de ladite couche intermédiaire, comme par exemple du polycarbonate. Encore d'autres exemples de matériaux appropriés pour ladite couche intermédiaire comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; le polycarbonate ; le polyuréthane ; les polyamides ; les polyimides, triactétate de cellulose (TAC), etc.

De manière avantageuse, selon un mode de réalisation dans lequel l'élément en couches 50 comprend le substrat extérieur 55, l'élément en couches peut comprendre sa surface principale externe lisse (qui est la surface principale externe 55A du substrat extérieur 55) un revêtement antireflet à l'interface entre l'air et le matériau constitutif du substrat extérieur 55 formant cette surface principale externe. Grâce à la présence de ce revêtement antireflet, un rayonnement incident sur l'élément en couches du côté de cette surface principale externe 55 est réfléchi de manière privilégiée à chaque surface de contact texturée plutôt que sur la surface externe lisse de l'élément en couches, ce qui correspond à un mode de réflexion diffuse plutôt qu'à un mode de réflexion spéculaire. Une réflexion diffuse du rayonnement par l'élément en couches est ainsi favorisée par rapport à une réflexion spéculaire.

Chaque élément en couches parmi le premier élément en couches 12 et le deuxième élément en couches 13 a la même structure que l'élément en couches 40 présenté à la [Fig. 6] ou que l'élément en couches 50 présenté à la [Fig. 7].

Un autre aspect de l'invention concerne un système de projection sur un dispositif d'affichage bilatéral, représenté à la [Fig. 8]. Le système de projection 2 comprend le dispositif d'affichage bilatéral 1 selon l'invention, un premier projecteur 31 et un deuxième projecteur 31.

Le premier projecteur 31 et le deuxième projecteur sont positionnés de part et d'autre du dispositif de projection bilatéral 31.

Le premier élément en couches 12 du dispositif d'affichage bilatéral 1 est destiné à être positionné en regard du premier projecteur 31 selon l'axe X. Ledit premier projecteur 31 est positionné de manière à projeter un faisceau lumineux recouvrant au moins une partie du premier élément en couches 12 et de préférence la totalité du premier élément en couches 12.

Le deuxième élément en couches 13 du dispositif d'affichage bilatéral 1 est destiné à être positionné en regard du deuxième projecteur 32 selon l'axe X. Ledit deuxième projecteur 32 est positionné de manière à projeter un faisceau lumineux recouvrant au moins une partie du deuxième élément en couches 13 et de préférence la totalité du deuxième élément en couches 13.

Avantageusement, le premier projecteur 31 et au deuxième projecteur 32 peuvent émettre des faisceaux lumineux vers le premier élément en couches 12 et le deuxième élément en couches 13 respectivement, pour afficher des contenus identiques ou différents, sans interférence entre les deux contenus grâce à la première couche absorbante 14 et éventuellement à la deuxième couche absorbante 15.

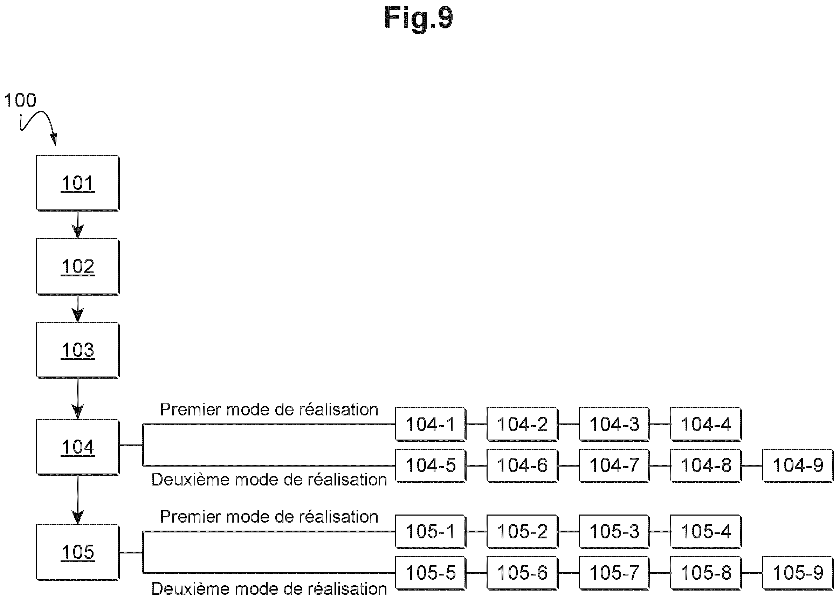

Un autre aspect de l'invention est un procédé 100 de fabrication du dispositif d'affichage bilatéral selon l'invention, représenté à la [Fig. 9]

Le procédé 100 comprend une première étape 101 d'obtention d'un premier substrat en verre comportant une première surface principale lisse et une deuxième surface principale lisse opposées.

Une deuxième étape 102 du procédé 100 est une étape de dépôt par sérigraphie de la première couche absorbante 14, le long d'une portion du premier substrat, le dépôt de la première couche absorbante étant réalisé sur la première surface principale lisse du premier substrat en verre.

Selon un mode de réalisation, le procédé 100 peut comprendre une troisième étape 103 de dépôt par sérigraphie de la deuxième couche absorbante, le long d'une portion du premier substrat, le dépôt de la deuxième couche absorbante étant réalisé sur la deuxième surface principale lisse du substrat central.

Le procédé 100 comprend une quatrième étape 104 de formation, sur la première couche absorbante, du premier élément en couches.

Le procédé 100 comprend une cinquième étape 105 de formation, sur la deuxième surface principale du premier substrat, du deuxième élément en couches.

Le premier substrat forme ainsi le substrat central, la première surface principale lisse étant la première surface extérieure du substrat central et la deuxième surface principale lisse étant la deuxième surface extérieure du substrat central.

Selon un premier mode de réalisation, l'étape de formation 104 du premier élément en couches sur la première couche absorbante comporte une pluralité de sous-étapes 104-1, 104-2 et 104-3 décrites dans la suite. Les étapes 104-1, 104-2 et 104-3 permettent d'obtenir un élément de couches 40 selon le mode de réalisation de la [Fig. 6].

La sous-étape 104-1 est une étape d'obtention d'un deuxième substrat 41, préférentiellement en verre, comportant une surface principale lisse et une surface principale texturée, ledit deuxième substrat 41 formant la couche extérieure du premier élément en couches. La sous-étape 104-2 est une étape de dépôt d'une couche conforme 43 sur la couche extérieure 41 du premier élément en couches et en particulier de la surface principale texturée de ladite couche extérieure 41.

La sous-étape 104-3 est une étape d'assemblage par feuilletage de l'ensemble formé par la couche extérieure 41 et de la couche centrale 43 avec le substrat central 11, l'assemblage étant réalisé via une couche intercalaire en polymère adaptée pour se déformer afin d'épouser une surface texturée de ladite couche extérieure 43. Ladite couche intercalaire forme la couche intérieure 42 du premier élément en couches.

Selon un deuxième mode de réalisation, l'étape de formation 104 du premier élément en couches sur la première surface principale substrat central comporte une pluralité de sous-étapes 104-5, 104-6, 104-7, 104-8 et 104-9 .Les étapes 104-5, 104-6,104-7,104-8 et 104-9 permettent d'obtenir un élément de couches 50 selon le mode de réalisation de la [Fig. 7].La sous-étape 104-5 est une sous-étape d'obtention d'un deuxième substrat, préférentiellement en verre, comportant une première surface principale lisse et une deuxième surface principale lisse, ledit deuxième substrat formant le substrat extérieur 55, ladite première surface principale lisse étant la surface supérieure du substrat extérieur 55, et ladite deuxième surface principale lisse étant la surface inférieure du substrat extérieur 55,

La sous-étape 104-6 est une sous-étape d'obtention d'un troisième substrat, préférentiellement sous la forme d'un film plastique, comprenant une surface principale lisse et une surface principale texturée, ladite surface principale lisse étant la surface inférieure de la couche intérieure 54 et ladite surface texturée étant la surface supérieure de la couche intérieure 54.

La sous-étape 104-7 est une sous-étape de dépôt, préférentiellement par magnétron et/ou sérigraphie, d'une couche conforme sur la couche intérieure 54 et en particulier sur la surface supérieure texturée de la couche intérieure 54, ladite couche conforme formant la couche centrale 53.

La sous-étape 104-8 est une sous-étape d'assemblage par feuilletage du substrat central 11 avec l'ensemble formé par la couche intérieure 54 et la couche centrale 53, l'assemblage étant réalisé via la couche intermédiaire 52,

La sous-étape 104-9 est une sous-étape d'assemblage par feuilletage du substrat extérieur 55 avec l'ensemble formé par la couche intérieure 54, la couche centrale 53, la couche intermédiaire 52 et le substrat central 11, l'assemblage étant réalisé via la couche externe 51 qui est adaptée pour se déformer afin d'épouser une surface texturée de la couche centrale 53.

Selon un premier mode de réalisation, l'étape de formation 105 du deuxième élément en couches comporte une pluralité de sous-étapes 105-1, 105-2 et 105-3 décrites dans la suite. Les étapes 105-1, 105-2 et 105-3 permettent d'obtenir un élément de couches 40 selon le mode de réalisation de la [Fig. 6].

La sous-étape 105-1 est une étape d'obtention d'un troisième substrat, préférentiellement en verre comportant une surface principale lisse et une surface principale texturée, ledit troisième substrat formant la couche extérieure du deuxième élément en couches.

La sous-étape 105-2 est une étape de dépôt d'une couche conforme sur la couche extérieure du deuxième élément en couches et en particulier de la surface principale texturée de ladite couche extérieure.

La sous-étape 105-3 est une étape d'assemblage de l'ensemble formé par la couche extérieure du deuxième élément en couches et de la couche centrale du deuxième élément en couches avec le substrat central, l'assemblage étant réalisé via une couche intercalaire en polymère capable de se déformer grâce à une étape de feuilletage afin d'épouser une surface texturée de ladite couche extérieure du premier élément en couches.

Selon un deuxième mode de réalisation, l'étape de formation 105 du deuxième élément en couches sur la deuxième surface principale substrat central comporte une pluralité de sous-étapes 105-5, 105-6, 105-7, 105-8 et 105-9. Les étapes 105-5, 105-6,105-7,105-8 et 105-9 permettent d'obtenir un élément de couches 50 selon le mode de réalisation de la [Fig. 7].

La sous-étape 105-5 est une sous-étape d'obtention d'un deuxième substrat, préférentiellement en verre, comportant une première surface principale lisse et une deuxième surface principale lisse, ledit deuxième substrat formant le substrat extérieur 55, ladite première surface principale lisse étant la surface supérieure du substrat extérieur 55, et ladite deuxième surface principale lisse étant la surface inférieure du substrat extérieur 55,

La sous-étape 105-6 est une sous-étape d'obtention d'un troisième substrat, préférentiellement sous la forme d'un film plastique, comprenant une surface principale lisse et une surface principale texturée, ladite surface principale lisse étant la surface inférieure de la couche intérieure 54 et ladite surface texturée étant la surface supérieure de la couche intérieure 54.

La sous-étape 105-7 est une sous-étape de dépôt, préférentiellement par magnétron et/ou sérigraphie, d'une couche conforme sur la couche intérieure 54 et en particulier sur la surface supérieure texturée de la couche intérieure 54, ladite couche conforme formant la couche centrale 53.

La sous-étape 105-8 est une sous-étape d'assemblage par feuilletage du substrat central 11 avec l'ensemble formé par la couche intérieure 54 et la couche centrale 53, l'assemblage étant réalisé via la couche intermédiaire 52.

La sous-étape 105-9 est une sous-étape d'assemblage par feuilletage du substrat extérieur 55 avec l'ensemble formé par la couche intérieure 54, la couche centrale 53, la couche intermédiaire 52 et le substrat central 11, l'assemblage étant réalisé via la couche externe 51 qui est adaptée pour se déformer afin d'épouser une surface texturée de la couche centrale 53.

## Revendications

1. Dispositif d'affichage bilateral (1) comprenant:
- Un premier élément en couches (12) transparent à réflexion diffuse,
- Un deuxième élément en couches (13) transparent à réflexion diffuse,
- Un substrat central (11) compris entre le premier élément en couches (12) et le deuxième élément en couches (13), et parallèle au premier (12) et deuxième (13) éléments en couches ;
- Une première couche absorbante (14) s'étendant le long d'au moins une portion du substrat central (11) et positionnée entre le substrat central (11) et le premier élément en couches (12).

2. Dispositif d'affichage (1) selon la revendication précédente **caractérisé en ce qu'**il comprend une deuxième couche absorbante (15) s'étendant le long d'au moins une portion du substrat central (11) et positionnée entre le substrat central (11) et le deuxième élément en couches (13).

3. Dispositif d'affichage (1) selon l'une quelconque des revendications précédentes **caractérisé en ce que** la première couche absorbante (14) est un émail foncé ou une peinture foncée, par exemple un émail noir ou une peinture noire.

4. Dispositif d'affichage (1) selon la revendication 2 **caractérisé en ce que** la deuxième couche absorbante (15) est un émail foncé ou une peinture foncée, par exemple un émail noir ou une peinture noire.

5. Dispositif d'affichage (1) selon l'une quelconque des revendications précédentes **caractérisé en ce que** le substrat central (11) est transparent.

6. Dispositif d'affichage (1) selon l'une quelconque des revendications 1 à 4 **caractérisé en ce que** le substrat central (11) est absorbant.

7. Dispositif d'affichage (1) selon l'une quelconque des revendications 1 à 4 **caractérisé en ce que** l'épaisseur du substrat est comprise entre 0.7 et 12 mm.

8. Dispositif d'affichage (1) selon la revendication précédente **caractérisé en ce que** l'épaisseur du substrat est comprise entre 1 et 6 mm et en particulier entre 2 et 5 mm.

9. Dispositif d'affichage (1) selon la revendication l'une quelconque des revendications précédentes **caractérisé en ce que** chaque élément en couches (12, 13) parmi les premier et deuxième élément en couches comprend :
- Une couche intérieure (42) constituée en des matériaux diélectriques,
- Une couche extérieure (41) constituée en des matériaux diélectriques,
La couche intérieure (42) étant la couche la plus proche du substrat central (11) et la couche extérieure (41) étant la couche la plus éloignée du substrat central (42), la couche intérieure (42) et la couche extérieure (41) ayant sensiblement le même indice de réfraction,
chaque élément de couches parmi les premier et deuxième élément en couches comprend en outre :
∘ une couche centrale (43) intercalée entre la couche intérieure (42) et la couche extérieure (41), cette couche centrale (43) étant formée soit par une couche unique qui est une couche diélectrique d'indice de réfraction différent de celui de la couche intérieure ou une couche métallique, soit par un empilement de couches qui comprend au moins une couche diélectrique d'indice de réfraction différent de celui de la couche intérieure ou une couche métallique,
où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

10. Dispositif d'affichage (1) selon la revendication précédente **caractérisé en ce que** la couche extérieure (41) d'au moins un élément en couches des premier et deuxième éléments en couches est un substrat en verre comprenant une surface principale lisse et une surface principale texturée, la surface principale texturée étant en contact avec la couche centrale.

11. Dispositif d'affichage selon la revendication 9 **caractérisé en ce qu'**au moins un élément en couches des premier et deuxième éléments en couches comprend un substrat extérieur (55) en contact avec la couche extérieure (51) et comprend une couche intermédiaire (52) réalisée préférentiellement en un matériau polymère, en contact selon une interface lisse avec la couche intérieure (52) dudit élément en couches d'une part, et le substrat central (11) d'autre part.

12. Système de projection (2) sur un dispositif d'affichage bilatéral **caractérisé en ce qu'**il comprend un premier (31) un deuxième (32) projecteur, et un dispositif d'affichage bilatéral (1) selon l'une quelconque des revendications 1 à 11, le premier projecteur (31) étant destiné à être positionné en regard du premier élément en couches (12) et le deuxième projecteur (32) étant destiné à être positionné en regard du deuxième élément en couches (13).

13. Procédé (100) de fabrication d'un dispositif d'affichage bilatéral (1) selon l'une quelconque des revendications 1 à 12 **caractérisé en ce qu'**il comprend les étapes suivantes :
- Obtention (101) d'un premier substrat, préférentiellement en verre, comportant une première surface principale lisse et une deuxième surface principale lisse opposées ;
- Dépôt (102) de la première couche absorbante (14), le long d'une portion du premier substrat, le dépôt de la première couche absorbante (14) étant réalisé sur la première surface principale lisse du premier substrat ;
- Formation (104), sur la première couche absorbante, du premier élément en couches (12) ;
- Formation (105), sur la deuxième surface principale du premier substrat, du deuxième élément en couches (13).
le premier substrat formant le substrat central (11).

14. Procédé selon la revendication précédente **caractérisé en ce qu'**il comprend avant l'étape (105) de formation du deuxième élément en couches (13) ou avant l'étape (104) de formation du premier élément en couches (12), une étape de dépôt de la deuxième couche absorbante (15) le long d'une portion du premier substrat, le dépôt de la deuxième couche absorbante (15) étant réalisé sur la deuxième surface principale lisse du premier substrat et **en ce que** l'étape de formation (105) du deuxième élément en couches (13) est réalisée sur la deuxième couche absorbante (15).

15. Procédé (100) de fabrication selon la revendication précédente **caractérisé en ce que** l'étape (104) de formation du premier élément en couches comprend les sous-étapes suivantes :
- Obtention (104-1) d'un deuxième substrat, préférentiellement en verre, comportant une surface principale lisse et une surface principale texturée, ledit deuxième substrat formant la couche extérieure (41) du premier élément en couches,
- dépôt (104-2) d'une couche centrale (43) conforme sur la couche extérieure du premier élément en couches et en particulier sur la surface principale texturée de ladite couche extérieure (41),
- assemblage (104-3) par feuilletage de l'ensemble formé par la couche extérieure (41) du premier élément en couches et de la couche centrale (43) avec le substrat central (11), l'assemblage étant réalisé via une couche intercalaire, préférentiellement en polymère, qui est adaptée pour se déformer afin d'épouser une surface texturée de la couche centrale (43), ladite couche intercalaire épousant la première surface extérieure du substrat central (43) et formant la couche intérieure (42) du premier élément en couches.

16. Procédé (100) de fabrication selon l'une quelconque des revendications 13 à 14 **caractérisé en ce que** l'étape (105) de formation du deuxième élément en couches comprend les sous-étapes suivantes :
- Obtention (105-1) d'un deuxième substrat, préférentiellement en verre, comportant une surface principale lisse et une surface principale texturée, ledit deuxième substrat formant la couche extérieure (41) du deuxième élément en couches,
- Dépôt (105-2) d'une couche centrale (43) conforme sur la couche extérieure du deuxième élément en couches et en particulier sur la surface principale texturée de ladite couche extérieure (41),
- assemblage (105-3) par feuilletage de l'ensemble formée par la couche extérieure (41) du deuxième élément en couches et de la couche centrale (43) avec le substrat central (11), l'assemblage étant réalisé via une couche intercalaire, préférentiellement en polymère, adaptée pour se déformer afin d'épouser une surface texturée de la couche centrale du deuxième élément en couches, ladite couche intercalaire épousant la première surface extérieure du substrat central (43) et formant la couche intérieure (42) du deuxième élément en couches.

17. Procédé (100) de fabrication selon la revendication 13 **caractérisé en ce que** l'étape (104) de formation du premier élément en couches comprend les sous-étapes suivantes :
- Obtention (104-5) d'un deuxième substrat, préférentiellement en verre, comportant une première surface principale lisse et une deuxième surface principale lisse, ledit deuxième substrat formant le substrat extérieur (55), ladite première surface principale lisse étant la surface supérieure du substrat extérieur (55), et ladite deuxième surface principale lisse étant la surface inférieure du substrat extérieur (55),
- Obtention (104-6) d'un troisième substrat, préférentiellement sous la forme d'un film plastique, comprenant une surface principale lisse et une surface principale texturée, ladite surface principale lisse étant la surface inférieure de la couche intérieure (54) et ladite surface texturée étant la surface supérieure de la couche intérieure (54),
- Dépôt (104-7) préférentiellement par magnétron et/ou sérigraphie, d'une couche conforme sur la couche intérieure (54) et en particulier sur la surface supérieure texturée de la couche intérieure (54), ladite couche conforme formant la couche centrale (53),
- Assemblage (104-8) par feuilletage du substrat central (11) avec l'ensemble formé par la couche intérieure (54) et la couche centrale (53), l'assemblage étant réalisé via la couche intermédiaire (52),
- Assemblage (104-9) par feuilletage du substrat extérieur (55) avec l'ensemble formé par la couche intérieure (54), la couche centrale (53), la couche intermédiaire (52) et le substrat central (11), l'assemblage étant réalisé via la couche externe (51) qui est adaptée pour se déformer afin d'épouser une surface texturée de la couche centrale (53).

18. Procédé (100) de fabrication selon la revendication 13 **caractérisé en ce que** l'étape (105) de formation du premier élément en couches comprend les sous-étapes suivantes :
- Obtention (105-5) d'un deuxième substrat, préférentiellement en verre, comportant une première surface principale lisse et une deuxième surface principale lisse, ledit deuxième substrat formant le substrat extérieur (55), ladite première surface principale lisse étant la surface supérieure du substrat extérieur (55), et ladite deuxième surface principale lisse étant la surface inférieure du substrat extérieur (55),
- Obtention (105-6) d'un troisième substrat, préférentiellement sous la forme d'un film plastique, comprenant une surface principale lisse et une surface principale texturée, ladite surface principale lisse étant la surface inférieure de la couche intérieure (54) et ladite surface texturée étant la surface supérieure de la couche intérieure (54),
- Dépôt (105-7) préférentiellement par magnétron et/ou sérigraphie, d'une couche conforme sur la couche intérieure (54) et en particulier sur la surface supérieure texturée de la couche intérieure (54), ladite couche conforme formant la couche centrale (53),
- Assemblage (105-8) par feuilletage du substrat central (11) avec l'ensemble formé par la couche intérieure (54) et la couche centrale (53), l'assemblage étant réalisé via la couche intermédiaire (52),
- Assemblage (105-9) par feuilletage du substrat extérieur (55) avec l'ensemble formé par la couche intérieure (54), la couche centrale (53), la couche intermédiaire (52) et le substrat central (11), l'assemblage étant réalisé via la couche externe (51) qui est adaptée pour se déformer afin d'épouser une surface texturée de la couche centrale (53).

## Patentansprüche

1. Zweiseitige Anzeigevorrichtung (1), umfassend:
- ein erstes transparentes Schichtelement (12) mit diffuser Reflexion,
- ein zweites transparentes Schichtelement (13) mit diffuser Reflexion,
- ein Mittelsubstrat (11), das zwischen dem ersten Schichtelement (12) und dem zweiten Schichtelement (13) und parallel zu dem ersten (12) und dem zweiten (13) Schichtelement ist;
- eine erste absorbierende Schicht (14), die sich entlang mindestens eines Abschnitts des Mittelsubstrats (11) erstreckt und zwischen dem Mittelsubstrat (11) und dem ersten Schichtelement (12) positioniert ist.

2. Anzeigevorrichtung (1) nach dem vorstehenden Anspruch,
**dadurch gekennzeichnet, dass** sie eine zweite absorbierende Schicht (15) umfasst, die sich entlang mindestens eines Abschnitts des Mittelsubstrats (11) erstreckt und zwischen dem Mittelsubstrat (11) und dem zweiten Schichtelement (13) positioniert ist.

3. Anzeigevorrichtung (1) nach einem der vorstehenden Ansprüche,
**dadurch gekennzeichnet, dass** die erste absorbierende Schicht (14) ein dunkles Email oder eine dunkle Farbe ist, beispielsweise ein schwarzes Email oder eine schwarze Farbe.

4. Anzeigevorrichtung (1) nach Anspruch 2, **dadurch gekennzeichnet, dass** die zweite absorbierende Schicht (15) ein dunkles Email oder eine dunkle Farbe ist, beispielsweise ein schwarzes Email oder eine schwarze Farbe.

5. Anzeigevorrichtung (1) nach einem der vorstehenden Ansprüche,
**dadurch gekennzeichnet, dass** das Mittelsubstrat (11) transparent ist.

6. Anzeigevorrichtung (1) nach einem der Ansprüche 1 bis 4,
**dadurch gekennzeichnet, dass** das Mittelsubstrat (11) absorbierend ist.

7. Anzeigevorrichtung (1) nach einem der Ansprüche 1 bis 4,
**dadurch gekennzeichnet, dass** die Dicke des Substrats zwischen 0,7 und 12 mm liegt.

8. Anzeigevorrichtung (1) nach dem vorstehenden Anspruch,
**dadurch gekennzeichnet, dass** die Dicke des Substrats zwischen 1 und 6 mm und insbesondere zwischen 2 und 5 mm liegt.

9. Anzeigevorrichtung (1) nach dem Anspruch nach einem der vorstehenden Ansprüche, **dadurch gekennzeichnet, dass** jedes Schichtelement (12, 13) von dem ersten und dem zweiten Schichtelement umfasst:
- eine Innenschicht (42), bestehend aus dielektrischen Materialien,
- eine Außenschicht (41), bestehend aus dielektrischen Materialien,
wobei die Innenschicht (42) die dem Mittelsubstrat (11) am nächsten gelegene Schicht ist und die Außenschicht (41) die am weitesten von dem Mittelsubstrat (42) entfernte Schicht ist, wobei die Innenschicht (42) und die Außenschicht (41) im Wesentlichen den gleichen Brechungsindex besitzen,
jedes Schichtelement von dem ersten und dem zweiten Schichtelement ferner umfasst:
∘ eine Mittelschicht (43), die zwischen der Innenschicht (42) und der Außenschicht (41) eingefügt ist, wobei diese Mittelschicht (43) entweder durch eine einzige Schicht, die eine dielektrische Schicht mit einem Brechungsindex, der sich von dem der Innenschicht unterscheidet, oder eine metallische Schicht ist, oder durch einen Stapel von Schichten ausgebildet ist, der mindestens eine dielektrische Schicht mit einem Brechungsindex, der sich von dem der Innenschicht unterscheidet, oder eine metallische Schicht umfasst,
wobei jede Kontaktoberfläche zwischen zwei angrenzenden Schichten des Schichtelements, von denen die eine dielektrisch und die andere metallisch ist, oder die zwei dielektrische Schichten mit unterschiedlichen Brechungsindizes sind, strukturiert und parallel zu den anderen strukturierten Kontaktoberflächen zwischen zwei angrenzenden Schichten ist, von denen die eine dielektrisch und die andere metallisch ist, oder die zwei dielektrische Schichten mit unterschiedlichen Brechungsindizes sind.

10. Anzeigevorrichtung (1) nach dem vorstehenden Anspruch,
**dadurch gekennzeichnet, dass** die Außenschicht (41) mindestens eines Schichtelements des ersten und des zweiten Schichtelements ein Glassubstrat ist, umfassend eine glatte Hauptoberfläche und eine texturierte Hauptoberfläche, wobei die texturierte Hauptoberfläche mit der Mittelschicht in Kontakt steht.

11. Anzeigevorrichtung nach Anspruch 9, **dadurch gekennzeichnet, dass** mindestens ein Schichtelement des ersten und des zweiten Schichtelements ein Außensubstrat (55) in Kontakt mit der Außenschicht (51) umfasst und eine Zwischenschicht (52) umfasst, die vorzugsweise aus einem Polymermaterial ausgeführt ist, die über eine glatte Grenzfläche einerseits mit der Innenschicht (52) des Schichtelements und andererseits mit dem Mittelsubstrat (11) in Kontakt steht.

12. System (2) zum Projizieren auf eine beidseitige Anzeigevorrichtung, **dadurch gekennzeichnet, dass** es einen ersten (31), einen zweiten (32) Projektor und eine beidseitige Anzeigevorrichtung (1) nach einem der Ansprüche 1 bis 11 umfasst, wobei der erste Projektor (31) dazu bestimmt ist, gegenüber dem ersten Schichtelement (12) positioniert zu werden, und der zweite Projektor (32) dazu bestimmt ist, gegenüber dem zweiten Schichtelement (13) positioniert zu werden.

13. Verfahren (100) zum Herstellen einer zweiseitigen Anzeigevorrichtung (1) nach einem der Ansprüche 1 bis 12, **dadurch gekennzeichnet, dass** es die folgenden Schritte umfasst:
- Erhalten (101) eines ersten Substrats, vorzugsweise aus Glas, das eine erste glatte Hauptfläche und eine zweite glatte Hauptfläche aufweist, die einander gegenüberliegen;
- Abscheiden (102) der ersten absorbierenden Schicht (14) entlang eines Abschnitts des ersten Substrats, wobei das Abscheiden der ersten absorbierenden Schicht (14) auf der ersten glatten Hauptoberfläche des ersten Substrats ausgeführt wird;
- Ausbilden (104) des ersten Schichtelements (12) auf der ersten absorbierenden Schicht;
- Ausbilden (105) des zweiten Schichtelements (13) auf der zweiten Hauptfläche des ersten Substrats.
Das erste Substrat, das das Mittelsubstrat (11) ausbildet.

14. Verfahren nach dem vorstehenden Anspruch,
**dadurch gekennzeichnet, dass** es vor dem Schritt (105) des Ausbildens des zweiten Schichtelements (13) oder vor dem Schritt (104) des Ausbildens des ersten Schichtelements (12) einen Schritt des Abscheidens der zweiten Absorptionsschicht (15) entlang eines Abschnitts des ersten Substrats umfasst, wobei das Abscheiden der zweiten Absorptionsschicht (15) auf der zweiten glatten Hauptoberfläche des ersten Substrats ausgeführt wird, und **dass** der Schritt des Ausbildens (105) des zweiten Schichtelements (13) auf der zweiten Absorptionsschicht (15) ausgeführt wird.

15. Herstellungsverfahren (100) nach dem vorstehenden Anspruch, **dadurch gekennzeichnet, dass** der Schritt (104) des Ausbildens des ersten Schichtelements die folgenden Unterschritte umfasst:
- Erhalten (104-1) eines zweiten Substrats, vorzugsweise aus Glas, das eine glatte Hauptfläche und eine texturierte Hauptfläche aufweist, wobei das zweite Substrat die Außenschicht (41) des ersten Schichtelements ausbildet,
- Abscheiden (104-2) einer konformen Mittelschicht (43) auf die Außenschicht des ersten Schichtelements und insbesondere auf die texturierte Hauptoberfläche der Außenschicht (41),
- Zusammenfügen (104-3) durch Laminieren der Anordnung, die durch die Außenschicht (41) des ersten Schichtelements und die Mittelschicht (43) ausgebildet wird, mit dem Mittelsubstrat (11), wobei das Zusammenfügen über eine Zwischenschicht ausgeführt wird, vorzugsweise aus Polymer, die geeignet ist, um sich zu verformen, um sich an eine strukturierte Oberfläche der Mittelschicht (43) anzupassen, wobei sich die Zwischenschicht an die erste Außenoberfläche des Mittelsubstrats (43) anpasst und die Innenschicht (42) des ersten Schichtelements ausbildet.

16. Herstellungsverfahren (100) nach einem der Ansprüche 13 bis 14, **dadurch gekennzeichnet, dass** der Schritt (105) zum Ausbilden des zweiten Schichtelements die folgenden Unterschritte umfasst:
- Erhalten (105-1) eines zweiten Substrats, vorzugsweise aus Glas, das eine glatte Hauptfläche und eine texturierte Hauptfläche aufweist, wobei das zweite Substrat die Außenschicht (41) des zweiten Schichtelements ausbildet,
- Abscheiden (105-2) einer konformen Mittelschicht (43) auf die Außenschicht des zweiten Schichtelements und insbesondere auf die texturierte Hauptoberfläche der Außenschicht (41),
- Zusammenfügen (105-3) durch Laminieren der Anordnung, die durch die Außenschicht (41) des zweiten Schichtelements und die Mittelschicht (43) ausgebildet wird, mit dem Mittelsubstrat (11), wobei das Zusammenfügen über eine Zwischenschicht ausgeführt wird, vorzugsweise aus Polymer, die geeignet ist, um sich zu verformen, um sich an eine strukturierte Oberfläche der Mittelschicht des zweiten Schichtelements anzupassen, wobei sich die Zwischenschicht an die erste Außenoberfläche des Mittelsubstrats (43) anpasst und die Innenschicht (42) des zweiten Schichtelements ausbildet.

17. Herstellungsverfahren (100) nach Anspruch 13,
**dadurch gekennzeichnet, dass** der Schritt (104) des Ausbildens des ersten Schichtelements die folgenden Unterschritte umfasst:
- Erhalten (104-5) eines zweiten Substrats, vorzugsweise aus Glas, umfassend eine erste glatte Hauptoberfläche und eine zweite glatte Hauptoberfläche, wobei das zweite Substrat das Außensubstrat (55) ausbildet, wobei die erste glatte Hauptoberfläche die obere Oberfläche des Außensubstrats (55) ist und die zweite glatte Hauptoberfläche die untere Oberfläche des Außensubstrats (55) ist,
- Erhalten (104-6) eines dritten Substrats, vorzugsweise in Form einer Kunststofffolie, umfassend eine glatte Hauptoberfläche und eine texturierte Hauptoberfläche, wobei die glatte Hauptoberfläche die untere Oberfläche der Innenschicht (54) ist und die texturierte Oberfläche die obere Oberfläche der Innenschicht (54) ist,
- Abscheiden (104-7), vorzugsweise durch Magnetron und/oder Siebdruck, einer konformen Schicht auf die Innenschicht (54) und insbesondere auf die texturierte obere Oberfläche der Innenschicht (54), wobei die konforme Schicht die Mittelschicht (53) ausbildet,
- Zusammenfügen (104-8) durch Laminieren des Mittelsubstrats (11) mit der Anordnung, die durch die Innenschicht (54) und die Mittelschicht (53) ausgebildet wird, wobei das Zusammenfügen über die Zwischenschicht (52) ausgeführt wird,
- Zusammenfügen (104-9) durch Laminieren des Außensubstrats (55) mit der Anordnung, die aus der Innenschicht (54), der Mittelschicht (53), der Zwischenschicht (52) und dem Mittelsubstrat (11) ausgebildet wird, wobei das Zusammenfügen über die Außenschicht (51) ausgeführt wird, die geeignet ist, um sich zu verformen, um sich an eine strukturierte Oberfläche der Mittelschicht (53) anzupassen.

18. Herstellungsverfahren (100) nach Anspruch 13,
**dadurch gekennzeichnet, dass** der Schritt (105) zum Ausbilden des ersten Schichtelements die folgenden Unterschritte umfasst:
- Erhalten (105-5) eines zweiten Substrats, vorzugsweise aus Glas, das eine erste glatte Hauptoberfläche und eine zweite glatte Hauptoberfläche aufweist, wobei das zweite Substrat das Außensubstrat (55) ausbildet, wobei die erste glatte Hauptoberfläche die obere Oberfläche des Außensubstrats (55) ist und die zweite glatte Hauptoberfläche die untere Oberfläche des Außensubstrats (55) ist,
- Erhalten (105-6) eines dritten Substrats, vorzugsweise in Form einer Kunststofffolie, umfassend eine glatte Hauptoberfläche und eine texturierte Hauptoberfläche, wobei die glatte Hauptoberfläche die untere Oberfläche der Innenschicht (54) ist und die texturierte Oberfläche die obere Oberfläche der Innenschicht (54) ist,
- Abscheiden (105-7), vorzugsweise durch Magnetron und/oder Siebdruck, einer konformen Schicht auf die Innenschicht (54) und insbesondere auf die texturierte obere Oberfläche der Innenschicht (54), wobei die konforme Schicht die Mittelschicht (53) ausbildet,
- Zusammenfügen (105-8) durch Laminieren des Mittelsubstrats (11) mit der Anordnung, die aus der Innenschicht (54) und der Mittelschicht (53) ausgebildet wird, wobei das Zusammenfügen über die Zwischenschicht (52) ausgeführt wird,
- Zusammenfügen (105-9) durch Laminieren des Außensubstrats (55) mit der Anordnung, die aus der Innenschicht (54), der Mittelschicht (53), der Zwischenschicht (52) und dem Mittelsubstrat (11) ausgebildet ist, wobei das Zusammenfügen über die Außenschicht (51) ausgeführt wird, die geeignet ist, um sich zu verformen, um sich an eine strukturierte Oberfläche der Mittelschicht (53) anzupassen.

## Claims

1. Bilateral display device (1) comprising:
- A first diffuse-reflective transparent layered element (12),
- A second diffuse-reflective transparent layered element (13),
- A central substrate (11) between the first layered element (12) and the second layered element (13), and parallel to the first (12) and second (13) layered elements;
- A first absorbent layer (14) extending along at least a portion of the central substrate (11) and positioned between the central substrate (11) and the first layered element (12).

2. Display device (1) according to the preceding claim, **characterized in that** it comprises a second absorbent layer (15) extending along at least a portion of the central substrate (11) and positioned between the central substrate (11) and the second layered element (13).

3. Display device (1) according to either of the preceding claims, **characterized in that** the first absorbent layer (14) is a dark enamel or a dark paint, for example a black enamel or a black paint.

4. Display device (1) according to claim 2, **characterized in that** the second absorbent layer (15) is a dark enamel or a dark paint, for example a black enamel or a black paint.

5. Display device (1) according to any of the preceding claims, **characterized in that** the central substrate (11) is transparent.

6. Display device (1) according to any of claims 1 to 4, **characterized in that** the central substrate (11) is absorbent.

7. Display device (1) according to any of claims 1 to 4, **characterized in that** the thickness of the substrate is between 0.7 and 12 mm.

8. Display device (1) according to the preceding claim,
**characterized in that** the thickness of the substrate is between 1 and 6 mm and in particular between 2 and 5 mm.

9. Display device (1) according to the claim any of the preceding claims, **characterized in that** each layered element (12, 13) of the first and the second layered element comprises:
- An inner layer (42) made of dielectric materials,
- An outer layer (41) made of dielectric materials,
The inner layer (42) being the layer closest to the central substrate (11) and the outer layer (41) being the layer furthest from the central substrate (42), the inner layer (42) and the outer layer (41) having substantially the same refractive index,
each layered element of the first and the second layered element further comprises:
∘ a central layer (43) interposed between the inner layer (42) and the outer layer (41), this central layer (43) being formed either by a single layer, which is a dielectric layer with a refractive index different from that of the inner layer or a metallic layer, or by a stack of layers, which comprises at least one dielectric layer with a refractive index different from that of the inner layer or a metallic layer,
where each contact surface between two adjacent layers of the layered element, one of which is dielectric and the other one of which is metallic, or which are two dielectric layers with different refractive indices, is textured and parallel to the other textured contact surfaces between two adjacent layers, one of which is dielectric, the other one of which is metallic, or which are two dielectric layers with different refractive indices.

10. Display device (1) according to the preceding claim, **characterized in that** the outer layer (41) of at least one layered element of the first and second layered elements is a glass substrate comprising a smooth main surface and a textured main surface, the textured main surface being in contact with the central layer.

11. Display device according to claim 9, **characterized in that** at least one layered element of the first and second layered elements comprises an outer substrate (55) in contact with the outer layer (51) and comprises an intermediate layer (52) made preferably of a polymer material, in contact at a smooth interface with the inner layer (52) of said layered element and the central substrate (11).

12. Projection system (2) on a bilateral display device, **characterized in that** it comprises a first (31) a second (32) projector, and a bilateral display device (1) according to any of claims 1 to 11, the first projector (31) being intended to be positioned opposite the first layered element (12) and the second projector (32) being intended to be positioned opposite the second layered element (13).

13. Method (100) for producing a bilateral display device (1) according to any of claims 1 to 12, **characterized in that** it comprises the following steps:
- Obtaining (101) a first substrate, preferably made of glass, having a first smooth main surface and a second smooth main surface opposite each other;
- Depositing (102) the first absorbent layer (14) along a portion of the first substrate, the deposition of the first absorbent layer (14) being carried out on the first smooth main surface of the first substrate;
- Forming (104) the first layered element (12) on the first absorbent layer;
- Forming (105) the second layered element (13) on the second main surface of the first substrate.
the first substrate forming the central substrate (11).

14. Method according to the preceding claim, **characterized in that** it comprises, before the step (105) of forming the second layered element (13) or before the step (104) of forming the first layered element (12), a step of depositing the second absorbent layer (15) along a portion of the first substrate, the deposition of the second absorbent layer (15) being carried out on the second smooth main surface of the first substrate, **and in that** the step of forming (105) the second layered element (13) is carried out on the second absorbent layer (15).

15. Production method (100) according to the preceding claim, **characterized in that** the step (104) of forming the first layered element comprises the following sub-steps:
- Obtaining (104-1) a second substrate, preferably made of glass, having a smooth main surface and a textured main surface, said second substrate forming the outer layer (41) of the first layered element,
- depositing (104-2) a conformal central layer (43) on the outer layer of the first layered element and in particular on the textured main surface of said outer layer (41),
- joining (104-3), by lamination, the arrangement formed by the outer layer (41) of the first layered element and the central layer (43) to the central substrate (11), the joining being carried out via an interlayer, preferably made of polymer, which is capable of deforming to conform to a textured surface of the central layer (43), said interlayer conforming to the first outer surface of the central substrate (43) and forming the inner layer (42) of the first layered element.

16. Production method (100) according to any of claims 13 to 14, **characterized in that** the step (105) of forming the second layered element comprises the following sub-steps:
- Obtaining (105-1) a second substrate, preferably made of glass, having a smooth main surface and a textured main surface, said second substrate forming the outer layer (41) of the second layered element,
- Depositing (105-2) a conformal central layer (43) on the outer layer of the second layered element and in particular on the textured main surface of said outer layer (41),
- joining (105-3), by lamination, the arrangement formed by the outer layer (41) of the second layered element and the central layer (43) to the central substrate (11), the joining being carried out via an interlayer, preferably made of polymer, capable of deforming to conform to a textured surface of the central layer of the second layered element, said interlayer conforming to the first outer surface of the central substrate (43) and forming the inner layer (42) of the second layered element.

17. Production method (100) according to claim 13, **characterized in that** the step (104) of forming the first layered element comprises the following sub-steps:
- Obtaining (104-5) a second substrate, preferably made of glass, having a first smooth main surface and a second smooth main surface, said second substrate forming the outer substrate (55), said first smooth main surface being the upper surface of the outer substrate (55), and said second smooth main surface being the lower surface of the outer substrate (55),
- Obtaining (104-6) a third substrate, preferably in the form of a plastic film, comprising a smooth main surface and a textured main surface, said smooth main surface being the lower surface of the inner layer (54) and said textured surface being the upper surface of the inner layer (54),
- Depositing (104-7), preferably by magnetron and/or screen printing, a conformal layer on the inner layer (54) and in particular on the textured upper surface of the inner layer (54), said conformal layer forming the central layer (53),
- Joining (104-8), by lamination, the central substrate (11) to the arrangement formed by the inner layer (54) and the central layer (53), the joining being carried out via the intermediate layer (52),
- Joining (104-9), by lamination, the outer substrate (55) to the arrangement formed by the inner layer (54), the central layer (53), the intermediate layer (52) and the central substrate (11), the joining being carried out via the outer layer (51) which is capable of deforming to conform to a textured surface of the central layer (53).

18. Production method (100) according to claim 13, **characterized in that** the step (105) of forming the first layered element comprises the following sub-steps:
- Obtaining (105-5) a second substrate, preferably made of glass, having a first smooth main surface and a second smooth main surface, said second substrate forming the outer substrate (55), said first smooth main surface being the upper surface of the outer substrate (55), and said second smooth main surface being the lower surface of the outer substrate (55),
- Obtaining (105-6) a third substrate, preferably in the form of a plastic film, comprising a smooth main surface and a textured main surface, said smooth main surface being the lower surface of the inner layer (54) and said textured surface being the upper surface of the inner layer (54),
- Depositing (105-7), preferably by magnetron and/or screen printing, a conformal layer on the inner layer (54) and in particular on the textured upper surface of the inner layer (54), said conformal layer forming the central layer (53),
- Joining (105-8), by lamination, the central substrate (11) to the arrangement formed by the inner layer (54) and the central layer (53), the joining being carried out via the intermediate layer (52),
- Joining (105-9), by lamination, the outer substrate (55) to the arrangement formed by the inner layer (54), the central layer (53), the intermediate layer (52) and the central substrate (11), the joining being carried out via the outer layer (51) which is capable of deforming to conform to a textured surface of the central layer (53).
